# EUROPÄISCHE PATENTSCHRIFT

(11) **EP 1 192 320 B1**
(45) Veröffentlichungstag und Bekanntmachung des Hinweises auf die Patenterteilung: **09.08.2006**
(21) Anmeldenummer: 00943830.0
(22) Anmeldetag: 19.06.2000
(51) Int. Cl.: E04B 1/78, F16L 59/02

(54) **DÄMMSTOFFELEMENT**
INSULATING ELEMENT
ELEMENT CALORIFUGE

(30) Priorität: 24.06.1999 DE 19928872
(43) Veröffentlichungstag der Anmeldung: 03.04.2002
(73) Patentinhaber: Deutsche Rockwool Mineralwoll GmbH & Co. OHG, 45966 Gladbeck (DE)
(72) Erfinder: KLOSE, Gerd-Rüdiger, D-46286 Dorsten (DE); PAULITSCHKE, Werner, D-41564 Kaarst (DE)
(74) Vertreter: Wanischeck-Bergmann, Axel
(86) Internationale Anmeldenummer: PCT/EP2000/005620
(87) Internationale Veröffentlichungsnummer: WO 2001/000941

(56) Entgegenhaltungen:
- EP-A- 0 867 572
- DE-A- 19 700 373

## Beschreibung

Die Erfindung betrifft ein Dämmstoffelement aus mit Bindemitteln gebundenen Mineralfasem, insbesondere Steinwollefasern, in Form einer Mineralfaserbahn, die zwei parallel zueinander angeordnete große Oberflächen, zwei in Längsrichtung der Oberflächen verlaufende Längsseiten und zwei Schmalseiten aufweist, wobei die großen Oberflächen im wesentlichen rechtwinklig zu den Längsseiten und den Schmalseiten und die Längsseiten im wesentlichen rechtwinklig zu den Schmalseiten angeordnet sind, und die eine Markierung zur Kennzeichnung der Materialeigenschaften de Mineralfaserbahn aufweist. Das aus der EP-A-0 867 572 bekannte Dämmstoffelement weist diese Merkmale auf.

Dämmstoffelemente der hier in Rede stehenden Art bestehen in der Regel aus Mineralwolle, Natur- oder Synthesefasern, die ohne oder mit geringen Mengen an organischen oder anorganischen Bindemitteln gebunden sind. Derartige Dämmstoffeelemente werden in Form von Bahnen, Filzen oder Platten hergestellt. Die Rohdichten werden in weiten Grenzen variiert. Aus normativen Gründen, zu Werbezwecken, zur Identifizierung in einem Lager oder zwecks Rückführung in den Stoffkreislauf nach Ablauf der Gebrauchsdauer werden Dämmstoffe in Form von beispielsweise Platten oder Bahnen im Bereich ihrer großen Oberflächen gekennzeichnet. Die Kennzeichnung erfolgt beispielsweise durch Farbaufträge oder durch lokale Erhitzung der organischen Bestandteile im Bereich einer oder beider großen Oberflächen, so daß sich die derart behandelten Bereiche von den unbehandelten Bereichen der Oberfläche optisch unterscheiden. Die Kennzeichnungen sind daher optisch wahrnehmbar und sollen insbesondere derart ausgebildet sein, daß sie das Dämmstoffelement nicht wesentlich schwächen.

Eine Alternative zum Auftrag von Farben bzw. zur lokalen Erhitzung ist darin zu sehen, daß das Dämmstoffelement im Bereich zumindest einer großen Oberfläche Ausnehmungen aufweist, die aber gegenüber den voranstehend beschriebenen Kennzeichnungen optisch wesentlich schlechter wahrnehmbar sind und in Abhängigkeit ihrer Größe das Dämmstoffelement schwächen.

In der Regel werden Kennzeichnungen auf die Oberflächen aufgetragen, die als Linien parallel zur Längskante oder rechtwinklig hierzu verlaufen, um als Schneidhilfe bei der Verarbeitung der Dämmstoffelemente zu dienen. Es ist aber auch bekannt, die Oberflächen mit Symbolen, beispielsweise Piktogrammen, oder Buchstaben bzw. Zahlen zu versehen, die eine Identifizierung des Dämmstoffelementes hinsichtlich seiner Materialeigenschaften ermöglichen.

Das Auftragen von Farben erfolgt mit den üblichen Spritztechniken. Einbrennmarkierungen werden mit einem Flammenstrahl oder durch das Aufsetzen beheizter Werkzeuge hergestellt. Derartige Dämmstoffelemente sind beispielsweise in der WO 92/13150 und der DE 36 12 857 A1 beschrieben.

Plattenförmige Dämmstoffelemente, die in komprimierter oder unkomprimierter Form in den Verkehr gebracht werden, werden zu Verpackungseinheiten zusammengefaßt, wobei die Dämmstoffelemente übereinander gestapelt und mit einer in der Regel transparenten Folie umhüllt werden. Derartige Dämmstoffelemente können auf üblichen Paletten oder auf Auflagekörpern aus zu Dämmzwecken geeigneten Materialien aufgelegt werden. Die Auflagekörper bzw. Paletten werden in der Regel mittels der Folie mit den Dämmstoffelementen verbunden. Die voranstehend erwähnte Komprimierung der plattenförmigen Dämmstoffelemente wird vornehmlich in bezug auf die Dicke vorgenommen, wobei Dämmstoffelemente mit höherer Steifigkeit sich nicht ohne irreversible Verformungen bzw. bleibenden Verlust an Festigkeit komprimieren lassen. Demgegenüber können Dämmstoffelemente in Form von Filzen und Bahnen auf zu 30% ihrer ursprünglichen Produktionsdicke komprimiert werden.

Neben den voranstehend beschriebenen plattenförmigen Dämmstoffelementen werden auch rollbare Dämmstoffelemente, nämlich Filze, Vliese und Bahnen in transparente Folien verpackt. Hierzu ist üblicherweise vorgesehen, die rollbaren Dämmstoffelemente auf zugfeste Folien, Papier- und / oder Folienverbundwerkstoffe oder dergleichen aufzukleben. Es sind aber auch unkaschierte gerollte Dämmstoffelemente bekannt. Die voranstehend beschriebenen transparenten Folien können entweder vollflächig oder teilflächig das gerollte Dämmstoffelement umgeben.

Sowohl bei plattenförmigen Dämmstoffelementen als auch bei gerollten Dämmstoffelementen ist die Anordnung von Markierungen auf den großen Oberflächen insoweit nachteilig, da diese Markierungen bei plattenförmigen gestapelten Dämmstoffelementen nur im Bereich der obersten Platte erkennbar sind und dies auch nur dann, wenn eine derartige Einheit entweder im oberen Bereich betrachtet werden kann oder zu diesem Zweck bei zu großer Höhe gekippt wird. In gleicher Weise besteht dieses Problem auch bei gerollten Dämmstoffelementen, da hier nur ein bestimmter Bereich visuell wahrnehmbar ist. In jedem Fall treten weitere Probleme auf, wenn - wie üblich - die Dämmstoffelemente mit einer Vielzahl von Folienlagen umwickelt sind. Hierbei hat sich gezeigt, daß die Folienlagen insbesondere im Bereich der Oberfläche und der Auflagefläche der Dämmstoffelemente angeordnet werden müssen, um eine ausreichend stabile Transporteinheit zu bilden. Die Anordnung einer Vielzahl von Folienlagen übereinander hat aber den Nachteil, daß die gegebene Transparenz der Folie mit zunehmender Anzahl der Folienlagen abnimmt, so daß eine darunter angeordnete Markierung auf der großen Oberfläche des Dämmstoffelementes nicht mehr erkennbar ist. Demzufolge können beispielsweise Lagerarbeiter und / oder auf der Baustelle arbeitende Personen die Art des Dämmstoffelementes mitunter nur nach teilweise oder vollständigem Öffnen der Folie hinsichtlich der durch die Kennzeichnungen definierten Eigenschaften einordnen.

Ausgehend von diesem Stand der Technik liegt der Erfindung die **Aufgabe** zugrunde, ein Dämmstoffelement zu schaffen, dessen Materialeigenschaften und Verarbeitungsparameter auch in aufgestapelten und insbesondere in einer eine Folie aufweisenden Verpackung angeordneten Zustand problemlos erkennbar ist.

Die **Lösung** dieser Aufgabenstellung sieht vor, daß auf zumindest einer Schmalseite und / oder Längsseite die Markierung zur Kennzeichnung der Materialeigenschaften und / oder Dimensionierung der Mineralfaserbahn angeordnet ist, die aus rechtwinklig zu den großen Oberflächen und / oder sich unter einem Winkel schneidenden Linien besteht.

Für den Umgang mit Dämmstoffelementen, die in Verpackungseinheiten zusammengefaßt sind, ist es gemäß der vorliegenden Erfindung von großem Vorteil, wenn Kennzeichnungen bzw. Markierungen auf den Seitenflächen der Dämmstoffelemente angeordnet und visuell sichtbar sind. Gemäß der vorliegenden Erfindung bestehen die Markierungen aus rechtwinklig zu den großen Oberflächen verlaufenden Linien bzw. aus sich unter einem Winkel schneidenden Linien, so daß eine große Anzahl von Kombinationsmöglichkeiten besteht, die eine Zuordnung einer Vielzahl von Produkten ermöglicht.

Die Markierungen können beispielsweise unter unterschiedlichen Winkeln angeordnet sein bzw. unterschiedliche Strichstärken und / oder Anordnungen aufweisen.

Nach einem weiteren Merkmal der Erfindung ist vorgesehen, daß die Markierung aus aufgedruckten, eingebrannten und / oder ausgenommenen Elementen besteht. Hierbei können sowohl einheitliche Ausgestaltungen der Markierung bzw. Kombinationen der verschiedenen Ausgestaltungen vorgesehen sein. Das Auftragen von, auch aus einiger Entfernung noch gut lesbaren Markierungen kann bei inkompressiblen Dämmstoffelementen, insbesondere Dämmplatten mit Hilfe der bekannten Spritztechniken erfolgen. Die Anordnung der Markierungen kann nach dem Zuschnitt der einzelnen Platten oder im Anschluß an das Aufstapeln mehrerer plattenförmiger Dämmstoffelemente zu einer Transporteinheit vorgesehen sein. Bei kompressiblen Dämmstoffelementen wird jedes Dämmstoffelement oder ein Stapel mehrerer Dämmstoffelemente vor der Anordnung der Markierung auf ein innerhalb der Transporteinheit vorgesehenes Maß verdichtet, bevor die Markierung auf die dann verdichteten Dämmstoffelemente aufgebracht wird. Bei Dämmstoffelementen, die gewickelt werden, kann die Markierung vor oder nach dem, in der Regel mit einer Kompression des Dämmstoffelementes verbundenen Aufrollvorgang ausgeführt werden.

Es ist ferner vorgesehen, daß die Linien Bestandteile von Piktogrammen, Zahlen, Buchstaben und / oder anderen sinnenthaltenden Zeichen sind. Alternativ kann vorgesehen sein, daß zwischen den Linien Piktogramme, Zahlen, Buchstaben und / oder andere sinnenthaltende Zeichen angeordnet sind, um eine leichtere Erkennung des Dämmstoffelementes hinsichtlich seiner Zusammensetzung und / oder seiner Eigenschaften zu ermöglichen. Die sinnenthaltenden Zeichen werden vorzugsweise aufgedruckt, eingebrannt und / oder mechanisch ausgenommen. Auch in diesem Fall besteht die Möglichkeit, die sinnenthaltenden Zeichen in einer von den Linien abweichenden Art am Dämmstoffelement anzuordnen.

Um eine Identifizierung der Dämmstoffelemente aus einer Vielzahl von Blickwinkeln zu ermöglichen, ist nach einem weiteren Merkmal der Erfindung vorgesehen, daß die Markierung an zumindest zwei parallel zu einander verlaufenden Seiten der Platte angeordnet sind. Demzufolge können die Markierungen auch an sämtlichen Schmalseiten des Dämmstoffelementes angeordnet sein.

Die Erfindung umfaßt rasterförmig aufgebrachte Markierungen, die als rechtwinklig zu den großen Oberflächen verlaufende Linien ausgebildet sind. Diese Linien erleichtern das Abschätzen von Abschnitten, die von größeren bzw. längeren Dämmstoffelementen abgetrennt werden sollen. Die Linien können über die gesamte Länge des Dämmstoffelementes eine gleichmäßige Strichdicke aufweisen. Anstelle gleichmäßig dicker Linien können aber auch in regelmäßigen Abständen Linien unterschiedlicher Dicke, Farbe und / oder Form angeordnet sein. Beispielsweise sind die Linien auf zumindest einer Seitenfläche des Dämmelementes im Abstand von 10 cm angeordnet, wobei jede fünfte Linie eine gegenüber den anderen Linien größere Strichstärke aufweist. Diese Ausgestaltung hat den Vorteil, daß die Markierung nicht nur zur Identifikation des Dämmstoffelementes, sondern auch zur erleichterten Verarbeitung desselben dient, insoweit die Markierungen als Hilfsmittel für das Zuschneiden des Dämmstoffelementes herangezogen werden. Produktionsseitig besteht durch eine derartige Markierung auch die Möglichkeit einer schnellen Orientierung hinsichtlich der vorgegebenen Länge eines ordnungsgemäß hergestellten Dämmstoffelementes.

Die gleichmäßige Anordnung der die Markierung bildenden Linien wird kontinuierlich, beispielsweise nach dem Besäumen einer endlosen Dämmstoffbahn aufgebracht. Demgegenüber ist es bei einer abgestuften Markierung vorteilhaft, diese auf die Länge des Dämmstoffelementes abzustimmen. Hierzu muß die Einrichtung zur Anordnung der Markierung auf dem Dämmstoffelement auf einen bestimmten Punkt des Dämmstoffelementes, vorzugsweise auf den Anfang gefahren werden und von da aus numerisch gesteuert die Linien der Markierung aufbringen.

Anstelle linienförmiger Markierungen können auch gitterförmige Markierungen vorgesehen sein, die beispielsweise das Ausklinken des Dämmstoffelementes im Bereich von Verengungen bei der Verarbeitung erleichtern.

Weitere Merkmale und Vorteile ergeben sich aus der nachfolgenden Beschreibung der zugehörigen Zeichnung, in der bevorzugte Ausführungsformen des erfindungsgemäßen Dämmstoffelementes dargestellt sind. In der Zeichnung zeigen:
- Figur 1: eine erste Ausführungsform eines erfindungsgemäßen Dämmstoffelementes in perspektivischer Ansicht und
- Figur 2: eine zweite Ausführungsform eines erfindungsgemäßen Dämmstoffelementes in perspektivischer Ansicht.

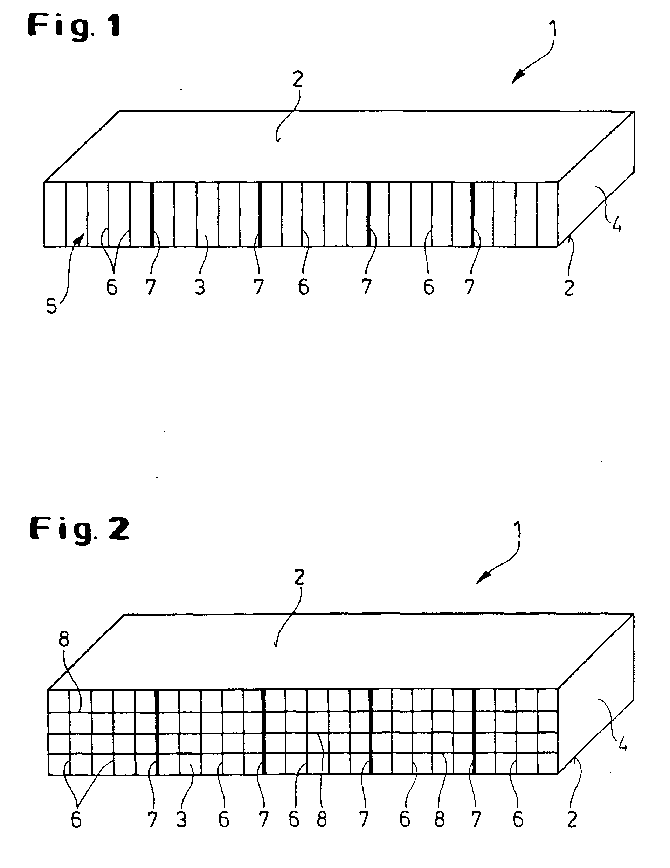

Ein in den Figuren 1 und 2 dargestelltes Dämmstoffelement 1 besteht aus mit Bindemitteln gebundenen Mineralfasern und weist eine quaderförmige Form, somit eine Platte auf. Demzufolge besteht das Dämmstoffelement aus zwei parallel zueinander verlaufenden großen Oberflächen 2, zwei in Längsrichtung der großen Oberflächen 2 verlaufenden Längsseiten 3 sowie zwei Schmalseiten 4. Die Längsseiten 3 sind rechtwinklig zu den großen Oberflächen 2 und zu den Schmalseiten 4 angeordnet. Die Schmalseiten 4 sind ebenfalls rechtwinklig zu den großen Oberflächen 2 ausgerichtet.

Auf der Längsseite 3 weist das Dämmstoffelement 1 eine Markierung 5 zur Kennzeichnung der Materialeigenschaften und / oder Dimensionierung des Dämmstoffelementes 1 auf. Die Markierung 5 besteht aus einer Vielzahl parallel zueinander angeordneten, rechtwinklig zu den großen Oberflächen 2 verlaufenden Linien 6, 7. Hierbei sind zwischen zwei benachbarten Linien 7 jeweils vier Linien 6 angeordnet, die sich dadurch von den Linien 7 unterscheiden, daß sie eine geringere Strichstärke aufweisen. Die Linien 6, 7 sind in gleichmäßigem Abstand zueinander angeordnet, so daß auch die Abstände benachbarter Linien 7 gleich groß ausgebildet sind.

Die Linien 6 sind in herkömmlicher Weise auf die Längsseite 3 des Dämmstoffelementes 1 aufgedruckt. Demgegenüber sind die Linien 7 der Markierung 5 in üblicher Weise in die Längsseite 3 des Dämmstoffelementes 1 eingebrannt.

In Ergänzung zum Ausführungsbeispiel gemäß Figur 1 weist das Ausführungsbeispiel gemäß Figur 2 neben den Linien 6, 7 weitere Linien 8 auf, die rechtwinklig zu den Linien 6 und 7 verlaufen, und somit parallel zu Kanten zwischen den großen Oberflächen 2 und der Längsseite 3 angeordnet sind. Diese zusätzlichen Linien 8 dienen ebenfalls wie die Linien 6, 7 der Identifikation des Dämmstoffelementes 1 sowie als Schneidhilfe beim Zuschneiden des Dämmstoffelementes 1, insbesondere beim Ausklinken des Dämmstoffelementes 1 in einem bestimmten Bereich, um das Dämmstoffelement in Verengungen einbauen zu können.

Die in den Figuren 1 und 2 dargestellten Dämmstoffelemente 1 sind als einzelne Platte einer Dämmstoffbahn ausgebildet, wobei die Dämmstoffbahn in einfacher Weise in einzelne Dämmstoffelemente 1 gemäß den Figuren 1 und 2 aufgeteilt werden kann, indem die Dämmstoffbahn auf eine Längsseite 3 aufgestellt wird und ein Schneidwerkzeug, vorzugsweise ein Messer durch die Dämmstoffbahn geführt wird. Hierbei dienen die Markierungen 5 als Schneidhilfen, wobei das Schneidwerkzeug entweder direkt auf einer Markierung 5 oder zwischen zwei benachbarten Markierungen 5 angesetzt und geführt wird.

## Patentansprüche

1. Dämmstoffelement aus mit Bindemitteln gebundenen Mineralfasem, insbesondere Steinwollefasem, in Form einer Mineralfaserbahn, die zwei zueinander parallel angeordnete große Oberflächen (2), zwei in Längsrichtung der Oberflächen (2) verlaufende Längsseiten (3) und zwei Schmalseiten (4) aufweist, wobei die großen Oberflächen (2) im wesentlichen rechtwinklig zu den Längsseiten (3) und den Schmalseiten (4) und die Längsseiten (4) im wesentlichen rechtwinklig zu den Schmalseiten (3) angeordnet sind, und die eine Markierung (5) zur Kennzeichnung der Materialeigenschaften der Mineralfaserbahn aufweist **dadurch gekennzeichnet,**
**daß** die Markierung (5) auf zumindest einer Schmalseite (4) und / oder Längsseite (3) angeordnet ist, die aus rechtwinklig zu den großen Oberflächen (2) und /oder sich unter einem Winkel schneidenden Linien (6, 7, 8) besteht.

2. Dämmstoffelement nach Anspruch 1,
**dadurch gekennzeichnet,**
**daß** die Kennzeichnung zusätzlich zur Dimensionierung der Mineralfaserbahn angebracht ist.

3. Dämmstoffelement nach Anspruch 1,
**dadurch gekennzeichnet,**
**daß** die Markierung (5) aus aufgedruckten, eingebrannten und / oder ausgenommenen Elementen besteht.

4. Dämmstoffelement nach Anspruch 1,
**dadurch gekennzeichnet,**
**daß** die Linien (6, 7, 8) Bestandteile von Piktogrammen, Zahlen, Buchstaben und / oder anderen sinnenthaltenden Zeichen sind.

5. Dämmstoffelement nach Anspruch 1,
**dadurch gekennzeichnet,**
**daß** zwischen den Linien (6, 7, 8) Piktogramme, Zahlen, Buchstaben und /oder andere sinnenthaltende Zeichen angeordnet sind.

6. Dämmstoffelement nach Anspruch 4 oder 5,
**dadurch gekennzeichnet ,**
**daß** die sinnenthaltenden Zeichen aufgedruckt, eingebrannt und / oder mechanisch ausgenommen sind.

7. Dämmstoffelement nach Anspruch 1,
**dadurch gekennzeichnet,**
**daß** Markierungen (5) an zumindest zwei parallel zueinander verlaufenden Seiten (3, 4) der Platte angeordnet sind.

8. Dämmstoffelement nach Anspruch 1,
**dadurch gekennzeichnet,**
**daß** die Markierung (5) in gleichmäßigen Abständen zueinander angeordnete Elemente, insbesondere Linien (6, 7, 8) aufweist.

9. Dämmstoffelement nach Anspruch 8,
**dadurch gekennzeichnet,**
**daß** einzelne Elemente durch eine von den anderen Elementen unterschiedliche Herstellungsweise und / oder durch einen größeren Farbauftrag hervorgehoben sind.

10. Dämmstoffelement nach Anspruch 1,
**dadurch gekennzeichnet ,**
**daß** die Markierung (5) aus einer Vielzahl von rechtwinklig zueinander verlaufenden Linien (6, 7, 8) besteht, die rechtwinklig oder parallel zu den Flächennormalen der großen Oberflächen (2) verlaufen.

11. Dämmstoffelement nach Anspruch 1,
**gekennzeichnet durch**
die Ausbildung als eine in einzelne Platten separierbare Dämmstoffbahn.

## Claims

1. Insulating element from mineral fibres bound with binding agents, particularly rock wool fibres, in the form of a mineral fibre web having two mutually parallel major surfaces (2), two longitudinal sides (3) extending in the longitudinal direction of the surfaces (2), and two narrow sides (4), said major surfaces (2) being arranged substantially at right angles to the longitudinal sides (3) and the narrow sides (4), and the longitudinal sides (4) being arranged substantially at right angles to the narrow sides (3), and which mineral fibre web includes a marking (5) for identifying the material properties of the mineral fibre web,
c h a r a c t e r i z e d in
that said marking (5) is arranged on at least one narrow side (4) and/or longitudinal side (3), which marking consists of lines (6, 7, 8) running at right angles to the major surfaces (2) and/or intersecting under an angle.

2. Insulating element according to claim 1,
**characterized in**
**that** said marking is provided in addition to the dimensioning of the mineral fibre web.

3. Insulating element according to claim 1,
**characterized in**
**that** said marking (5) consists of elements that are imprinted, branded and/or recessed.

4. Insulating element according to claim 1,
**characterized in**
**that** the lines (6, 7, 8) are components of pictographs, numbers, letters and/or other symbols of informative contents.

5. Insulating element according to claim 1,
**characterized in**
**that** between the lines (6, 7, 8) pictographs, numbers, letters and/or other symbols of informative contents are arranged.

6. Insulating element according to claim 4 or 5,
**characterized in**
**that** the symbols of informative contents are imprinted, branded and/or mechanically recessed.

7. Insulating element according to claim 1,
**characterized in**
**that** the markings (5) are arranged on at least two mutually parallel extending sides (3, 4) of the board.

8. Insulating element according to claim 1,
**characterized in**
**that** the marking (5) includes elements, particularly lines (6, 7, 8), that are arranged at equal distances to each other.

9. Insulating element according to claim 8,
**characterized in**
**that** individual elements stand out in the production method which is different from the other elements and/or in a larger extent of colour application.

10. Insulating element according to claim 1,
**characterized in**
**that** the marking (5) consists of a plurality of lines (6, 7, 8) running at right angles to each other, which lines run at right angles or parallel to the surface normal of the major surfaces (2).

11. Insulating element according to claim 1,
**characterized by**
being formed as a web of insulating material which is separable to form individual boards.

## Revendications

1. Elément calorifuge en fibres minérales liées à des liants, en particulier en fibres de laine minérale, en forme de lé de fibres minérales, qui présente deux grandes surfaces (2) placées parallèlement l'une à l'autre, deux côtés longitudinaux (3) dans le sens longitudinal des surfaces (2) et deux petits côtés (4), les grandes surfaces (2) étant placées substantiellement à angle droit par rapport aux longs côtés (3) et aux petits côtés (4) et les longs côtés (4) étant placés substantiellement à angle droit par rapport aux petits côtés (3) et qui présente un marquage (5) pour l'identification des propriétés de matériau du lé de fibres minérales,
**caractérisé en ce**
**que** le marquage (5) est placé sur au moins un petit côté (4) et/ou long côté (3) qui est constitué par des lignes (6, 7, 8) à angle droit avec les grandes surfaces (2) et/ou qui se coupent en formant un angle.

2. Elément calorifuge selon la revendication 1,
**caractérisé en ce**
**que** l'identification est appliquée en plus du dimensionnement du lé de fibres minérales.

3. Elément calorifuge selon la revendication 1,
**caractérisé en ce**
**que** le marquage (5) est constitué par des éléments imprimés, marqués au fer chaud et/ou enlevés.

4. Elément calorifuge selon la revendication 1,
**caractérisé en ce**
**que** les lignes (6, 7, 8) sont des composants de pictogrammes, chiffres, lettres et/ou d'autres signes contenant un sens.

5. Elément calorifuge selon la revendication 1,
**caractérisé en ce**
**que** des pictogrammes, chiffres, lettres et/ou d'autres signes contenant un sens sont placés entre les lignes (6, 7, 8).

6. Elément calorifuge selon la revendication 4 ou 5,
**caractérisé en ce**
**que** les signes contenant un sens sont imprimés, marqués au fer chaud et/ou enlevés mécaniquement.

7. Elément calorifuge selon la revendication 1,
**caractérisé en ce**
**que** les marquages (5) sont placés sur au moins deux côtés (3, 4) parallèles l'un à l'autre du panneau.

8. Elément calorifuge selon la revendication 1,
**caractérisé en ce**
**que** le marquage (5) présente des éléments placés à des intervalles réguliers les uns des autres, en particulier des lignes (6, 7, 8).

9. Elément calorifuge selon la revendication 8,
**caractérisé en ce**
**que** des éléments individuels sont mis en valeur par un mode de fabrication différent des autres éléments et/ou par une couche de peinture plus grande.

10. Elément calorifuge selon la revendication 1,
**caractérisé en ce**
**que** le marquage (5) est constitué par une multitude de lignes (6, 7, 8) à angle droit les unes par rapport aux autres qui sont à angle droit ou parallèles aux normales de surface des grandes surfaces (2).

11. Elément calorifuge selon la revendication 1,
**caractérisé par**
la configuration comme un lé de matériau calorifuge pouvant être séparé en différents panneaux.
